Europäisches Patentamt

European Patent Office

Office européen des brevets

(11) Veröffentlichungsnummer: **0 356 979**
**A2**

(12) **EUROPÄISCHE PATENTANMELDUNG**

(21) Anmeldenummer: **89115891.7**

(22) Anmeldetag: **29.08.89**

(51) Int. Cl.5: **C08L 69/00** , //(C08L69/00, 51:04,25:08)

(30) Priorität: **02.09.88 DE 3829828**

(43) Veröffentlichungstag der Anmeldung:
**07.03.90 Patentblatt 90/10**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Neumann, Rainer, Dr.**
**Mozartstrasse 2b**
**D-6704 Mutterstadt(DE)**
Erfinder: **Vietmeier, Juergen, Dr.**
**Waldstrasse 112**
**D-6706 Wachenheim(DE)**
Erfinder: **Baumgartner, Ehrenfried, Dr.**
**Goethestrasse 1**
**D-6701 Roedersheim-Gronau(DE)**

(54) **Thermoplastische Formmasse, nämlich Mischung aus einem Polycarbonat, einem Styrol-Acrylnitrilcopoly-merisat und einem eine Pfropfhülle aufweisenden Kautschuk.**

(57) Thermoplastische Formmasse enthaltend, bezogen auf die Mischung aus A und B und C,

A: 10 bis 85 Gew.% mindestens eines Polycarbonats A,

B: 10 bis 50 Gew.% eines Pfropfmischpolymerisats B aus, jeweils bezogen auf B,

$b_1$: 20 bis 80 Gew.% mindestens eines Kautschuks $b_1$ mit einer Glastemperatur von unter $0°C$ und

$b_2$: 80 bis 20 Gew.% Hülle $b_2$, erhalten durch Pfropfung des Kautschuks mit einer Mischung aus, jeweils bezogen auf $b_2$,

$b_{21}$: 70 bis 95 Gew.% Methylmethacrylat $b_{21}$ und

$b_{22}$: 5 bis 30 Gew.% mindestens eines substituierten (Meth)acrylamids $b_{22}$ der allgemeinen Formel $H_2C=CR-CO-NHX$ in der R Wasserstoff oder ein Methylrest ist und X ein Cyclohexyl-, Methylcyclohexyl-. Benzyl- oder Phenylrest bedeutet.

C: 5 bis 50 Gew.% eines thermoplastischen Copolymerisats C aus, jeweils bezogen auf C,

$c_1$: 90 bis 50 Gew.% einpolymerisierten Einheiten des Styrols, $\alpha$-Methylstyrol oder eines kernalkylierten Styrols

$c_2$: 10 bis 50 Gew.% einpolymerisierten Einheiten des (Meth)acrylnitrils und/oder Methylmethacrylats, sowie deren Verwendung zur Herstellung von Formteilen.

EP 0 356 979 A2

EP 0 356 979 A2

**Thermoplastische Formmasse, nämlich Mischung aus einem Polycarbonat, einem Styrol-Acrylnitrilco-polymerisat und einem eine Pfropfhülle aufweisenden Kautschuk**

Die Erfindung betrifft eine schlagzähe thermoplastische Formmasse auf der Grundlage einer Mischung aus einem Polycarbonat (PC), einem Styrol-Acrylnitril-Copolymerisat (SAN) und einem speziellen Pfropfkautschuk.

Eine Übersicht über den Stand der Technik ist beispielsweise den folgenden Druckschriften zu entnehmen:

DE-A-11 70 141 (1)
DE-A-18 10 993 (2)
DE-A-22 59 564 (3)
DE-A-20 37 419 (4)
EP-A-244 856 (5)
DE-A-32 10 284 (6)
DE-A-22 64 104 (7)
DE-A-34 14 118 (8)
DE-A-35 18 538 (9)
DE-A-36 32 946 (10)
DE-A-35 37 100 (11)

Die Schlagzähmodifizierung von Polycarbonat mit ABS-Kautschuk ist in (1) und (2) beschrieben. Diese Formmassen besitzen im allgemeinen zufriedenstellende Eigenschaften. Häufig wird allerdings eine höhere Wärmeformbeständigkeit, Zähigkeit und verbesserte Witterungsbeständigkeit angestrebt. In (3), (4) und (5) werden deshalb zur Verbesserung der Beständigkeit gegen Licht und Wärme Formmassen beschrieben, die aus einem Polycarbonat und einem ASA-Polymerisat aufgebaut sind. Nachteilig ist die bekannte Temperaturempfindlichkeit der bekannten Formmassen, die hauptsächlich bei höheren Verarbeitungstemperaturen im Spritzguß zu verfärbten Formteilen mit ungenügender Zähigkeit führt. Außerdem ist die Zähigkeit dieser Formmassen stark von der Verarbeitungstemperatur abhängig, was dem Verarbeiter im allgemeinen nur einen engen Spielraum für die Herstellung von Formteilen zuläßt.

In (6) werden Polycarbonatmischungen beschrieben, die einem mit MMA gepfropften Acrylatkautschuk in Kombination mit PMMA und gegebenenfalls ABS oder SAN beinhalten. Diese Formmassen neigen allerdings, insbesondere bei den für eine ausreichende Zähigkeit notwendigen Anteilen an ABS, besonders bei höherer Temperatur zur Entmischung, verbunden mit einem Abnahme der Zähigkeit.

In (7) und (11) werden Mischungen aus PC mit SAN und einem mit MMA gepfropften Polybutadien beschrieben. In (8) wird vorgeschlagen, in solchen Mischungen Pfropfkautschuke mit mehrschaligem Aufbau zu verwenden, wobei auf einen Polybutadienkern zuerst im wesentlichen Styrol, dann eine Mischung aus Styrol und Acrylnitril und in der letzten Stufe MMA aufgepfropft wurde. Allerdings zeigen die daraus hergestellten Formmassen noch die oben geschilderten Mängel.

In (9) werden einphasige kautschukfreie Polymermischungen aus Polycarbonat und Copolymerisaten mit speziellen (Meth)acrylestern bzw. -amiden beschrieben, die z.B. einen Benzotriazolrest als UV-Absorber tragen. Ebenfalls einphasig sind nach (10) PC-Mischungen mit MMA und N-Cyclohexyl- bzw. N-Benzyl-methacrylamidcopolymeren. Solche Mischungen sind transparent und zeigen eine gute UV-Beständigkeit. Allerdings genügen solche kautschukfreie Mischungen teilweise nicht den hohen Ansprüchen hinsichtlich der Zähigkeit. Außerdem ist auch hier die Kerbschlagzähigkeit der Formmassen extrem von der Verarbeitungstemperatur abhängig, wobei hauptsächlich bei tiefer Prüfungstemperatur ein steiler Abfall der Zähigkeit, d.h. eine starke Zunahme der Versprödung beobachtet wird. Aufgabe der Erfindung war deshalb, eine schlagzähe Polymermischung aus einem Polycarbonat und eine Pfropfkautschuk herzustellen, die die oben geschilderten Mängel nicht oder in wesentlich geringerem Maße aufweisen. Insbesondere sollte das Verarbeitungsverhalten beim Spritzguß verbessert werden.

Es wurde gefunden, daß spezielle Pfropfkautschuke, die eine auf einen Elastomerkern aufgepfropfte Hülle aus MMA-N-Benzyl(meth)acrylamid oder MMA-N-Phenyl(meth)acrylamid oder MMA-N-Cylohexyl-(meth)acrylamid-copolymeren tragen, zur Verbesserung der Verarbeitungseigenschaften von Polycarbonatmischungen führen. Neben guter Wärmeformbeständigkeit und Zähigkeit weisen solche Mischungen eine gegenüber bekannten Polycarbonat-Kautschukmischungen, wesentlich geringere Abhängigkeit der Kerbschlagzähigkeit von der Verarbeitungstemperatur auf. Dies ist umso erstaunlicher als bekannt ist, daß Blends aus Polycarbonaten und MMA-Polymeren bei höheren Temperaturen (> 220 °C) entmischen. Eine Beschreibung des Mischungsverhaltens findet sich in J. of Polymer Science Part C, Polym. Letters, Vol. 26,

2

33-40 (1988) und der dort zitierten Literatur.

Die Erfindung betrifft eine thermoplastische Formmasse enthaltend, bezogen auf die Mischung aus A und B und C,

A: 10 bis 85 Gew.% mindestens eines Polycarbonats A,

B: 10 bis 50 Gew.% eines Pfropfmischpolymerisats B aus, jeweils bezogen auf B,

$b_1$: 20 bis 80 Gew.% mindestens eines Kautschuks $b_1$ mit einer Glastemperatur von unter 0°C und

$b_2$: 80 bis 20 Gew.% einer Hülle $b_2$, erhalten durch Pfropfung des Kautschuks mit einer Mischung aus, jeweils bezogen auf $b_2$,

$b_{21}$: 70 bis 95 Gew.% methylmethacrylat $b_{21}$ und

$b_{22}$: 5 bis 30 Gew.% mindestens eines substituierten (Meth)acrylamids $b_{22}$ der allgemeinen Formel $H_2C = CR-CO-NHX$ in der R Wasserstoff oder ein Methylrest ist und X ein Cyclohexyl-, Methylcyclohexyl-, Benzyl- oder Phenylrest ist.

C: 5 bis 50 Gew.% eines thermoplastischen Copolymerisats C aus, jeweils bezogen auf C,

$c_1$: 90 bis 50 Gew.% einpolymerisierten Einheiten des Styrols, α-Methylstyrols oder eines kernalkylierten Styrols

$c_2$: 10 bis 50 Gew.% einpolymerisierten Einheiten des (Meth)acrylnitrils und/oder Methylmethacrylats.


Komponente A

Als Polycarbonate (Komponente A) können die bekannten Polycarbonate verwendet werden. Unter Polycarbonaten A im Sinne der erfindungsgemäßen Formmasse sollten Polycarbonate auf der Basis von Homopolycarbonaten und Copolycarbonaten von Bisphenolen verstanden werden. Als Bisphenole kommen dabei beispielsweise in Frage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 2 299 835 und in der DE-A 22 48 817 beschrieben sind. Besonders bevorzugt sind Polycarbonate auf der Basis von sog. Bisphenol A, dem 2,2-Bis(4-hydroxyphenyl)propan. Die Synthese der Polycarbonate wird beispielsweise in der US-PS 2 999 835 und der GB-PS 772 627 beschrieben.

Die Komponente A weist im allgemeinen ein mittleres Molekulargewicht $\overline{M}_w$, bestimmt durch Lichtstreuung, im Bereich von 25.000 bis 200.000 auf.

Die Formmasse besteht zu 10 bis 85, bevorzugt zu 30 bis 80 Gew.% aus der Komponente A.


Komponente B

Die Komponente B ist ein Pfropfmischpolymerisat und ist in den Formmassen zu 10 bis 50, bevorzugt zu 15 bis 40 Gew.% enthalten.

Dieses Propfmischpolymerisat ist aufgebaut aus einer Pfropfgrundlage $b_1$, die 20 bis 80, bevorzugt 30 bis 70 Gew.%, bezogen auf B ausmacht. Die Pfropfgrundlage besteht aus einem Kautschuk mit einer Glastemperatur von unter 0°C, bevorzugt unter -20°C. Aufgepfropft ist, jeweils bezogen auf B, eine Pfropfhülle $b_2$, die 80 bis 20 Gew.%, bevorzugt 70 bis 30 Gew.%, bezogen auf B, ausmacht. Die Pfropfhülle $b_2$ wird erfindungsgemäß erhalten durch Pfropfen mit einer Mischung aus 70 bis 95 Gew.% Methylmethacrylat ($b_{21}$) und 5 bis 30 Gew.% eines substituierten (Meth)acrylamids ($b_{22}$) der allgemeinen Formel $H_2C = CR-CO-NHX$, in der R Wasserstoff oder Methyl und X einen Cyclohexyl-, Methylcyclohexyl-, Benzyl- oder Phenylrest bedeutet. Die Pfropfhülle stellt somit ein Copolymeres aus Methylmethacrylat und MMA-N-Cyclohexyl(meth)acrylamid, MMA-N-2-Methylcyclohexyl(meth)acrylamid, MMA-N-phenyl(meth)acrylamid oder MMA-N-Benzyl-(meth)acrylamid dar. Auch Mischungen dieser speziellen N-substituierten Alkyl(meth)acrylamide gemäß der allgemeinen Formel in Kombination mit MMA können als Pfropfmonomere verwendet werden.

Die Herstellung geeigneter Pfropfmischpolymerisate durch Polymerisation der Pfropfmonomeren in Gegenwart eines Kautschuks ist bekannt.

Der Kautschuk $b_1$) soll eine Glastemperatur [nach K.H. Illers und H. Breuer, Kolloid-Zeitschrift 167, (1961), Seite 110] haben, die unter 0°C, vorzugsweise unter -20°C liegt. Als Kautschuk kommt z.B. in Betracht: Polybutadien (vgl. DE-A-14 20 775 und DE-A-14 95 089); Copolymerisate aus Butadien und Styrol (vgl. GB-PS 649 166); Polyacrylsäureester (vgl. DE-A-12 60 135) sowie Copolymerisate aus Acrylsäureester und Butadien (vgl. DE-A-12 38 207); ferner Elastomere von Coplymerisaten aus Acrylsäureestern mit Styrol, Acrylnitril und Vinylethern und Copolymerisate aus Ethylen, Propylen und einem nicht konjugierten Dien (EPDM-Kautschuke).

Die Pfropfcopolymerisation kann wie bekannt in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion, einen mittleren Teilchendurchmesser ($d_{50}$-Wert der integralen Masseverteilung) von 0,08 µm auf. In der Regel liegt nach der Vergrößerung der Teilchen, z.B. durch Agglomeration oder bei der Gewinnung der Emulsion im Wege des Saatlatex-Verfahrens der $d_{50}$-Wert im Bereich 0,1 bis 1 µm. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft, also durch covalente Bindungen an den Kautschuk-Fadenmolekülen gebunden.

Komponente C

Die Formmasse besteht zu 5 bis 50 Gew.%, vorzugsweise 5 bis 40 Gew.%, aus der Komponente C.

Als Komponente C der erfindungsgemäßen Formmassen werden Styrol-(Meth)-acrylnitril-Copolymerisate, Styrol-Methyl(meth)acrylat-Copolymere oder Copolymerisate aus Styrol, Methyl(meth)acrylat und (Meth)-acrylnitril verwendet; diese bestehen im wesentlichen aus Copolymerisaten, die 10 bis 50 Gew.% Meth-(acrylnitril und/oder Methyl(meth)acrylat, vorzugsweise (Meth)acrylnitril als Monomere $c_2$) und 50 bis 90 Gew.-% Styrol, $\alpha$-Methylstyrol und/oder ein kernalkylsubstituiertes Styrol bzw. Methyl(meth)acrylat oder deren Mischungen als Monomere $c_1$ einpolymerisiert enthalten.

Der Styrolbestandteil kann, um die Wärmeformbeständigkeit zu verbessern, ganz oder teilweise durch $\alpha$-Methylstyrol oder kernalkyliertes Styrol, insbesondere p-Methylstyrol, ersetzt sein. Die besonders bevorzugt angewendeten Styrol-Acrylnitril-Copolymeriste sind im Handel erhältlich und können z.B. nach der Lehre der DE-AS 10 01 001 bzw. DE-PS 1 003 436 hergestellt werden. Der Molekulargewichtsbereich der Copolymerisate kann z.B. 80,000 bis 500,000 (Gewichtsmittel $M_w$ aus Lichtstreuung) betragen. Die Styrol-acrylnitrilpolymerisate können gegebenenfalls schlagzäh modifiziert sein. Geeignete Modifier sind Polybutadien/Styrol-Acrylnitril-Copolymerisate (ABS) oder Butylacrylat-Kautschuke. Der Zusatz dieser Polymerisate empfiehlt sich, wenn eine hohe Zähigkeit der Formmassen gewünscht wird, insbesondere wenn die Formmassen nur einen geringen Anteil des Pfropfmischpolymerisats B aufweisen. Die Pfropfmisch-Copolymerisate B sind an sich bekannt, z.B. aus Ullmanns "Enzyclopädie der Technischen Chemie", 4. Aufl. Bd. 19, 1980, S. 277-295, und im Handel erhältlich.

Komponente D

Die thermoplastische Formmasse kann, bezogen auf 100 Gew.-Teile A + B + C noch zusätzlich übliche Zusatzstoffe in Mengen von 0,1 bis 40 Gew.-Teile enthalten. Als solche Zusatzstoffe seien genannt: Füllstoffe, Farbstoffe, Pigmente, Antistatika, Verstärkungsmittel wie Glasfasern, Antioxidantien, auch Flammschutzmittel und Synergisten und insbesondere Schmiermittel. Andere für SAN-Polymerisate und Pfropfmischpolymerisate bzw. Polycarbonate übliche Zusatzstoffe können enthalten sein.

Als Schmiermittel sind z.B. solche auf der Grundlage von Ethylen- und Propylenoxid, handelsüblich als Pluriol®-Marken zu nennen. Als Flammschutzmittel können insbesondere die in der DE-A-34 36 815 genannten Mittel verwendet werden, wobei insbesondere Poly(tetrabrombisphenol-A-glycidyl-)ether mit einem Molekulargewicht von 40 000 bevorzugt wird; handelsüblich ist z.B. das Produkt F 2400 der Firma Makteshim.

Herstellung der Formmassen

Das Mischen der Komponenten kann nach allen bekannten Methoden erfolgen. Vorzugsweise geschieht jedoch das Mischen der Komponenten durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation können aber auch teilweise entwässert oder direkt als Dispersion mit der Komponente C und dann mit dem Polycarbonat A und gegebenfalls mit D vermischt werden, wobei dann während der Vermischung die vollständige Trocknung des Pfropfmischpolymerisats erfolgt.

Die Herstellung der Formmasse erfolgt z.B. dadurch, daß eine Schmelze der harten Polymerisate A und C mit dem Pfropfmischpolymerisaten bei einer Temperatur über 200 °C intensiv vermischt wird. Sie geschieht, um eine besonders homogene Verteilung der Weichphase in der Hartmatrix zu erzielen, bevorzugt dadurch, daß man in der Schmelze der Polycarbonate (Komponente A), z.B. in einem Extruder mit Vakuumentgasung, das gefällte Pfropfmischpolymerisat B, das noch 10 bis 40 Gew.% Wasser enthalten kann, bei einer Temperatur über 180 °C einbringt und intensiv vermischt.

Die erfindungsgemäße Formmasse kann mit allen bekannten Verfahren der Thermoplastverarbeitung bearbeitet werden, also z.B. durch Extrudieren, Spritzgießen, Kalandrieren, Hohlkörperblasen, Pressen und Sintern; besonders bevorzugt werden aus den erfindungsgemäßen Formmassen Formteile durch Spritzgießen für den Automobilbau hergestellt.

Die in den nachstehenden Beispielen verwendeten Parameter wurden wie folgt bestimmt:
- Die Kerbschlagzähigkeit $a_4$ in [KJ/m$^2$] wurde nach DIN 53453 an bei 250°, 260°, 280° und 300 °C gespritzten Normkleinstäben gemessen. Die Prüfung wurde bei Raumtemperatur, 0 °C und -40 °C vorgenommen.
- Der Gelbstich der Produkte wurde objektiv visuell an spritzgegossenen Rundscheiben ermittelt.
- Die Viskositätszahl, VZ, $\eta_{spez/c}$ in [ml/g] wurde bei 25 °C in einer 0,5 %igen Lösung in DMF gemessen, im Falle des Polycarbonats in einer 0,5 %igen Lösung in Methylenchlorid.

Die folgenden Bestandteile wurden verwendet:


Komponente A:

Je ein aromatisches Polycarbonat auf der Grundlage von (Bisphenol A), handelsüblich als Lexan® mit der relativen Viskositätszahl
VZ = 52,0 ml/g und VZ = 61,2 ml/g (A$_1$ bzw. A$_2$).


Pfropfmischpolymerisate B:

Verwendet wurden zwei Pfropfgrundlagen, nämlich eine großteilige Acrylatkautschukdispersion (Kautschuk b$_1$) und eine (feinteilige) Polybutadiendispersion (Kautschuk b$_1$′)


Kautschuk b$_1$:

In einer ersten Stufe wurden 16 Teile Butylacrylat und 0,4 Teile Tricyclodecenylacrylat in 150 Teilen Wasser unter Zusatz von einem Teil des Natriumsalzes einer C$_{12}$- bis C$_{18}$-Paraffinsulfonsäure, 0,3 Teilen Kaliumpersulfat, 0,3 Teilen Natriumpyrophosphat unter Rühren auf 60 °C erwärmt. 10 Minuten nach dem Anspringen der Polymerisationsreaktion wurden innerhalb von 3 Stuneden eine Mischung aus 82 Teilen Butylacrylat und 1,6 Teilen Tricyclodecenylacrylat zugegeben. Nach Beendigung der Monomerzugabe wurde das Gemisch noch eine Stunde sich selbst überlassen.

Zu einer Vorlage aus 2,5 Teilen des in der ersten Stufe erhaltenen Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer C$_{12}$ bis C$_{18}$-Paraffinsulfonsäure in 25 Teilen Wasser bei 60 °C zugegeben. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße wurde zu 290 nm ermittelt (d$_{50}$-Wert der integralen Masseverteilung, wie sie mittels einer Ultrazentrifuge entsprechend der Methode von W. Scholtan und H. Lange, Kolloid. Z. und Z. Polymer 250 (1972), Seiten 782-796 bestimmt wurde).


Kautschuk b$_1$′:

In einem für 10 bar ausgelegten V2A-Stahlkessel mit Blattrührer wurde vorgelegt:

| 150 Teile | Wasser |
|---|---|
| 1,2 Teile | Kaliumoleat |
| 0,3 Teile | Kaliumpersulfat |
| 0,3 Teile | Natriumbicarbonat |
| 0,15 Teile | Natriumpyrophosphat |

Zur Entfernung des Sauerstoffs wurde zweimal mit Stickstoff gespült und die Lösung dann in Stickstoff-Atmosphäre auf 65°C erhitzt. Darauf wurden 0,5 Teile tert.-Dodecylmercaptan und 16,6 Teile Butadien zugesetzt. Eine Stunde nach Polymerisationsbeginn wurden weitere 83,3 Teile Butadien innerhalb von 5 Stunden zudosiert. 5 Stunden nach Beendigung der Butadien-Zugabe d.h. nach 11 Stunden wurden nochmals 0,5 Teile tert.-Dodecylmercaptan zugegeben. Nach einer Reaktionszeit von insgesamt 19 Stunden wurde bei einem Umsatz von 96 % eine Polybutadien-Emulsion mit einem Feststoffgehalt von 39,2 %, bezogen auf die Emulsion, erhalten. 255 Teile der Polybutadien-Emulsion wurden bei 65°C mit 74 Teilen Wasser verdünnt. Zur Agglomeration des Latex wurden 30 Teile einer wäßrigen Dispersion eines Ethylacrylat-Copolymeren zudosiert, das 96 Gew.% Ethylacrylat und 4 Gew.% Methacrylamid einpolymerisiert enthält. Der Feststoffgehalt dieser Dispersion betrug 10 Gew.%, bezogen auf die Dispersion.

Herstellung des Pfropfmischpolymerisats B1

150 Teile des Latex $b_1$ als Pfropfgrundlage wurden mit 40 Teilen einer Mischung aus Methylmethacrylat und N-Benzylmethacrylamid (Verhältnis 91:9) und 110 Teilen Wasser gemischt und unter Rühren nach Zusatz von weiteren 0,03 Teilen Kaliumpersulfat und 0,05 Teilen Laurylperoxid 4 Stunden auf 65°C erhitzt. Das bei der Pfropfmischpolymerisation erhaltene Polymerisationsprodukt wurde mittels einer Calciumchloridlösung bei 95°C aus der Dispersion ausgefüllt, abgetrennt, mit Wasser gewaschen und bei 80°C im Vakuum getrocknet.

Herstellung des Pfropfmischpolymerisats B2

Als Pfropfgrundlage wurde wieder der Latex $b_1$ verwendet. Es wurde wie bei der Herstllung von B1 verfahren. Als Pfropfmonomere wurden Methylmethacrylat und N-Phenylmethacrylamid (Verhältnis 80:20) verwendet. Die Mengenverhältnisse und Aufarbeitung sind wie bei B1 beschrieben.

Herstellung des Pfropfmischpolymerisats B3

150 Teile des Latex $b_1$ wurden mit 50 Teilen einer Mischung aus Methylmethacrylat und Cyclohexylmethacrylamid (Verhältnis 94:6) unter den bei der Herstellung von B1 angegebenen Bedingungen gepfropft und aufgearbeitet.

Herstellung des Pfropfmischpolymerisats B4

Die Polybutadiendispersion $b_1'$ wurde auf 70°C gebracht und bei dieser Temperatur mit 0,13 Teilen Kaliumpersulfat (in Form einer 3 %igen wäßrigen Lösung), 0,02 Teilen Dodecylmercaptan und 11 Teilen eines Gemisches aus Methylmethacrylat und N-Cyclohexylmethacrylamid (Verhältnis 92:8) versetzt. 10 Minuten nach Beginn der Pfropfreaktion wurde innerhalb von 3 Stunden ein Gemisch aus 56 Teilen Methylmethacrylat, N-Cyclohexylacrylamid (Verhältnis 92:8) und 0,1 Teilen tert.-Dodecylmercaptan zudosiert. Die Temperatur wurde bis eine Stunde nach nach Beendigung der Monomerenzugabe bei ca. 75°C gehalten. Das entstandene Pfropfpolymerisat wurde über ein Sieb filtriert und mittels Calciumchloridlösung und verdünnter Schwefelsäure bei 95°C gefällt, abgesaugt und getrocknet.

Herstellung des Propfmischpolymerisats B5

6

Die Pfropfreaktion auf die Polybutadiendispersion b₁' wurde wie bei der Herstellung von B4 beschrieben durchgeführt. Das Verhältnis Methylmethacrylat zu N-Benzylmethacrylamid betrug 75 zu 25. Es wurden zunächst 15 Teile dieses Gemisches anpolymerisiert und anschließend 70 Teile des Gemisches zudosiert und wie unter B4 beschrieben weiter verfahren.

Herstellung des Pfropfmischpolymerisats B6

Wie bei der Herstellung von B4 beschrieben, mit dem Unterschied, daß als Pfropfmonomere Styrol und Acrylnitril im Verhältnis 75:25 verwendet wurde, Mengenverhältnisse ansonsten wie bei B5.

Herstellung der Pfropfmischpolymerisats B7 (zu Vergleichszwecken)

Es wurde wie bei der Herstellung von B1 verfahren, jedoch reines Methylmethacrylat auf den Acrylatkautschuk gepfropft.

Pfropfmischpolymerisat B8 (zu Vergleichszwecken)

Das Pfropfmischpolymerisat B8 wurde entsprechend den Angaben zum Beispiel der DE-OS 3 210 284 hergestellt.

Hierzu wurde unter Rühren folgende Emulsion bei 65 °C innerhalb 22 Stunden polymerisiert:

| | |
|---|---|
| 90 Gew.-Teile | Butadien |
| 10 Gew.-Teile | Styrol |
| 1,8 Gew.-Teile | Na-Salz der disproportionierten Abietinsäure |
| 0,257 Gew.-Teile | Natriumhydroxid |
| 0,3 Gew.-Teile | n-Dodecylmercaptan |
| 1,029 Gew.-Teile | Na-Ethylendiamintetraacetat |
| 0,023 Gew.-Teile | Kaliumpersulfat |
| 176 Gew.-Teile | Wasser |

Der erhaltene Latex enthält Butadien/Styrol-Copolymerteilchen eines mittleren Durchmessers von 0,1 μ.

Anschließend wurden 45 Gew.-Teile dieses Latex, 2800 Teile Wasser und 8 Teile Kaliumpersulfat bei 65 °C in einem Reaktor vorgelegt.

Innerhalb von 5 Stunden wurden folgende Mischungen in den Reaktor getrennt eindosiert:

| | | |
|---|---|---|
| Mischung A: | 3013 Gew.-Teile | n-Butylacrylat |
| | 6 Gew.-Teile | Triallylcyanurat |
| Mischung B: | 2134 Gew.-Teile | Wasser |
| | 41 Gew.-Teile | Na-Sulfonat von C₁₄- bis C₁₈-Kohlenwasserstoffen |

Anschließend wird 4 Stunden bei 65 °C auspolymerisiert.

Der mittlere Teilchendurchmesser beträgt 0,55 μ.

Zur Pfropfung wurden 4400 Gew.-Teile des so erhaltenen Latex mit Polybutadienkern und Butylacrylathülle bei 65 mit 720 Gew.-Teilen Wasser und 5 Gew.-Teilen Kaliumpersulfat vorgelegt.

Bei 70 °C wurden innerhalb von 4 Stunden getrennt folgende Zuläufe eindosiert:

| | | |
|---|---|---|
| Zulauf 1: | 11300 Gew.-Teile | Methylmethacrylat |
| Zulauf 2: | 1430 Gew.-Teile | Wasser |
| | 16 Gew.-Teile | Na-Sulfonat von C₁₄- bis C₁₈-Kohlenwasserstoffen |

Anschließend wurde 4 Stunden bei 70°C nachgerührt. Der gebildete Latex des Pfropfmischpolymerisats 88 aus 60 Teilen Kautschuk und 40 Teilen Methylmethacrylat wurde durch Koagulation mit Magnesiumsulfatlösung und verdünnter Schwefelsäure isoliert und getrocknet.

Pfropfmischpolymerisat B9 (zu Vergleichszwecken)

Es wurde ein Pfropfmischpolymerisat mit dreistufiger Pfropfhülle mit Butylacrylatkern, einer ersten Hülle aus Styrol, einer zweiten aus Styrol-Acrylnitril (Verhältnis 75:25) und einer dritten Hülle aus Methylmethacrylat nach den Angaben zum Beispiel der DE-OS 34 14 118 hergestellt. Die mittlere Teilchengröße betrug 0,49 μm. Das Pfropfmischpolymerisat bestand zu 50 Gew.% aus dem Butylacrylatkern, zu 10 Gew.% aus dem Material der ersten Schale, zu 20 Gew.% aus dem der zweiten Schale und zu 20 Gew.-Teilen aus dem der dritten Schale. Gewichtsangaben entsprechend den jeweils angewandten Monomerenmengen, d.h. einschließlich der als Nebenprodukten auftretenden nicht gepfropften Polymeren.

Pfropfmischpolymerisat B10 (zu Vergleichszwecken)

Es wurden nach der DE-OS 22 64 104. Beispiel 1, 60 Teile eines Polybutadienlatex mit 24 Teilen Methylmethacrylat und 16 Teilen Styrol gepfropft und nach Koagulation isoliert und getrocknet.

Pfropfmischpolymerisat B11 (zu Vergleichszwecken)

Es wurde ein Pfropfmischpolymerisat nach der DE-OS 35 37 100 hergestellt. Das auf 60 Teile eines Polybutadienlatex eine 2-stufige Pfropfhülle aus 30 Teilen Styrol und Acrylsulfid im Gewichtsverhältnis 70:30 und einer zweiten Hülle aus 10 Teilen Methylmethacrylat aufweist.

Komponente C

Ein Monomerengemisch aus Styrol und Acrylnitril wurde unter üblichen Bedingungen in Lösung polymerisiert. Das erhaltene Styrol-Acrylnitril-polymerisat hatte einen Acrylnitrilgehalt von 25 % und eine Viskositätszahl von 80 ml/g.

Für die Vergleichsversuche wurde außerdem verwendet:

Komponente P₁

Polymethylmethacrylatpolymer mit einem Schmelzindex MF1 (230/3,8) von ca. 6 g/10 min. (DIN 53735); im Handel erhältlich als Plexiglas® 7N.

Komponente P₂

Copolymerisat aus 92 Gew.-Teilen Methylmethacrylat und 8 Gew.-Teilen N-Cyclohexylmethacrylamid mit einem mittleren Molekulargewicht ($M_w$) von 64 000 gemäß Beispiel 1 der DE-OS 36 32 946.

Die in den nachfolgenden Tabellen angegebenen Mengen der Komponenten (jeweils Gewichtsteile) werden mit 0,2 Gew.% eines sterisch gehinderten Phenols auf einem Fluidmischer gemischt und bei 260°C auf einem Doppelschneckenextruder (z.B. Typ ZSK von Werner & Pfleiderer) extrudiert. Aus dem getrockneten Granulat wurden Formmassen für die Eigenschaftsprüfungen durch Spritzgießen hergestellt.

Beispiel 1 und Vergleichsversuche V1 und V2 - hierzu Tabelle 1

Es wird die größere Verarbeitungsbreite der erfindungsgemäßen Formmassen gegenüber den kautschukfreien Mischungen der DE-OS 36 32 946 und üblichen PC-ABS-Mischungen verdeutlicht.

8

Tabelle 1

|  | 1 | V1 | V2 |
|---|---|---|---|
| Polycarbonat $A_2$ | 55 | 55 | 55 |
| Pfropfmischpolymerisat $B_4$ | 15 | - | - |
| Pfropfmischpolymerisat $B_6$ | - | 15 | - |
| Komponente C (S:AN = 75:25) | 30 | 30 | - |
| Komponente $P_2$ | - | - | 45 |
| Kerbschlagzähigkeit bei -40 °C in [kJ/m²] und |  |  |  |
| Massetemperatur 260 °C | 12,8 | 11,9 | 4,3 |
| Massetemperatur 280 °C | 11,9 | 7,0 | 1 |
| Aussehen der bei 280 °C gespritzten Rundscheiben | leicht gelblich | deutlich gelb | transparent hell |

Außerdem wird die mangelnde Kerbschlagzähigkeit der kautschukfreien Mischung ersichtlich.

Beispiele 2 und 3 und Vergleichsversuche V3, V4 und V5 - hierzu Tabelle 2

Die Beispiele 2 und 3 verdeutlichen die geringe Abhängigkeit der Kerbschlagzähigkeit von der Massetemperatur der erfindungsgemäßen Formmassen gegenüber den Formmassen gemäß der DE 32 10 284 (V3) und der DE 34 14 188 (V4), die mit MMA gepfropfte Kautschuke enthalten. Während bei Raumtemperatur der Zähigkeitsabfall über die Massetemperatur kaum deutlich wird, werden schon bei einer Prüfung bei 0 °C die Vorteile der erfindungsgemäßen Formmassen hinsichtlich der Verarbeitungsbreite ersichtlich.

Tabelle 2

|  |  | 2 | 3 | V3 | V4 | V5 |
|---|---|---|---|---|---|---|
| Polycarbonat $A_2$ |  | 60 | 60 | 60 | 60 | 60 |
| Komponente C (SAN/75:25) |  | 20 | 20 | - | 20 | 20 |
| Komponente $P_1$ |  | - | - | 20 | - | - |
| Pfropfkautschuke B8 |  | - | - | 20 | - | - |
| Pfropfkautschuke B7 |  | - | - | - | - | 20 |
| Pfropfkautschuke B1 |  | - | 20 | - | - | - |
| Pfropfkautschuke B4 |  | 20 | - | - | - | - |
| Pfropfkautschuke B9 |  | - | - | - | 20 | - |
| Kerbschlagzähigkeit $a_k$ [kJ/m²] bei 0 °C und |  |  |  |  |  |  |
| Massetemperatur : | MT = 260 °C | 29 | 24 | 31 | 29 | 26 |
|  | MT = 280 °C | 29 | 21 | 27 | 25 | 19 |
|  | MT = 300 °C | 25 | 21 | 9 | 11 | 14 |
| $a_k$ [kJ/m²] bei RT und | MT = 260 °C | 33 | 31 | 35 | 39 | 30 |
|  | MT = 280 °C | 31 | 33 | 34 | 37 | 31 |
|  | MT = 300 °C | 30 | 28 | 31 | 25 | 28 |

Beispiel 4 und Vergleichsbeispiel V6 und V7 - hierzu Tabelle 3

EP 0 356 979 A2

Auch Mischungen mit Pfropfkautschuken nach DE-OS 22 64 104 und DE 35 37 10 zeigen Nachteile in der Kältezähigkeit im Vergleich zu den erfindungsgemäßen Formmassen; die Vergleichsversuche V6 und V7 weisen eine entsprechende Zusammensetzung auf

Tabelle 3

|  | Beispiel 4 | V6 | V7 |
|---|---|---|---|
| Polycarbonat $A_1$ | 65 | 65 | 65 |
| Komponente C (SAN = 75/25) | 30 | 30 | 30 |
| Pfropfkautschuk B10 | - | 15 | - |
| Pfropfkautschuk B11 | - | - | 15 |
| Pfropfkautschuk B4 | 15 | - | - |
| Kerschlagzähigkeit bei -40°C [kJ/m$^2$] | | | |
| MT = 260°C | 16 | 15 | 17 |
| MT = 280°C | 14 | 19 | 16 |
| MT = 300°C | 11 | 9 | 4 |

Beispiele 5 bis 9 - hierzu Tabelle 4

Tabelle 4

|  | 5 | 6 | 7 | 8 | 9 |
|---|---|---|---|---|---|
| Polycarbonat $A_2$ | 40 | 40 | 75 | 50 | 50 |
| Pfropfkautschuk B2 | 25 | - | - | - | - |
| Pfropfkautschuk B3 | - | 25 | - | 10 | 10 |
| Pfropfkautschuk B5 | - | - | 15 | - | - |
| Pfropfkautschuk B6 | - | - | - | - | 20 |
| Komponente C | 35 | 35 | 10 | 40 | 20 |
| Kerbschlagzähigkeit bei 0°C [kJ/m$^2$] und | | | | | |
| MT 240°C | 14 | 13 | 20 | 7 | 28 |
| MT 280°C | 12 | 11 | 24 | 6 | 23 |

Tabelle 4 zeigt, daß schon bei geringer Menge an Pfropfkautschuk die Schlagzähmodifizierung der Hartkomponente mit einem ABS-Harz deutliche Vorteile in der Schlagzähigkeit bringt.

**Ansprüche**

1. Thermoplastische Formmasse enthaltend, bezogen auf die Mischung aus A und B und C,

A: 10 bis 85 Gew.% mindestens eines Polycarbonats A,

B: 10 bis 50 Gew.% eines Pfropfmischpolymerisats B aus, jeweils bezogen auf B,

$b_1$: 20 bis 80 Gew.% mindestens eines Kautschuks $b_1$ mit einer Glastemperatur von unter 0°C und

$b_2$: 80 bis 20 Gew.% einer Hülle $b_2$, erhalten durch Pfropfung des Kautschuks mit einer Mischung aus, jeweils bezogen auf $b_2$,

$b_{21}$: 70 bis 95 Gew.% Methylmethacrylat $b_{21}$ und

$b_{22}$: 5 bis 30 Gew.% mindestens eines substituierten (Meth)acrylamids $b_{22}$ der allgemeinen Formel

10

$H_2C = CR\text{-}CO\text{-}NHX$ in der R Wasserstoff oder einen Methylrest und X einen Cyclohexyl-, Methylcyclohexyl-, Benzyl- oder Phenylrest bedeutet,

C: 5 bis 50 Gew.% eines thermoplastischen Copolymerisats C aus, jeweils bezogen auf C,

$c_1$: 90 bis 50 Gew.% einpolymerisierten Einheiten des Styrols, $\alpha$-Methylstyrols oder eines kernalkylierten Styrols

$c_2$: 10 bis 50 Gew.% einpolymerisierten Einheiten des (Meth)acrylnitrils und/oder Methylmethacrylats.

2. Thermoplastische Formmasse, enthaltend, bezogen auf die Komponenten A und B und C

A: 30 bis 80 Gew.% mindestens eines Polycarbonats A

B: 15 bis 40 Gew.% eines Pfropfmischpolymerisats B aus, jeweils bezogen auf B,

$b_1$: 30 bis 70 Gew.% mindestens eines Kautschuks $b_1$ mit einer Glastemperatur von unter -20°C

$b_2$: 30 bis 70 Gew.% einer Hülle $b_2$, erhalten durch Pfropfung des Kautschuks mit einer Mischung aus, jeweils bezogen auf $b_2$,

$b_{21}$: 70 bis 95 Gew.% Methylmethacrylat $b_{21}$ und

$b_{22}$: 5 bis 30 Gew.% mindestens eines substituierten (Meth)acrylamids $b_{22}$ der allgemeinen Formel $H_2C = CR\text{-}CO\text{-}NHX$ in der R Wasserstoff oder einen Methylrest und X einen Cyclohexyl-, Methylcyclohexyl-, Benzyl- oder Phenylrest bedeutet,

C: 5 bis 40 Gew.% eines thermoplastischen Copolymerisats C aus, jeweils bezogen auf C,

$c_1$: 90 bis 50 Gew.% einpolymerisierten Einheiten des Styrols, $\alpha$-Methylstyrols oder eines kernalkylierten Styrols

$c_2$: 10 bis 50 Gew.% einpolymerisierten Einheiten des (Meth)acrylnitrils und/oder Methylmethacrylats.

3. Thermoplastische Formmasse nach Anspruch 1 oder 2 enthaltend ein Polycarbonat A aud der Grundlage von Bisphenol A.

4. Thermoplastische Formmasse nach Anspruch 1, 2 oder 3, dadurch gekennzeichnet, daß das (Meth)-acrylamid $b_{22}$ N-Cyclohexyl(meth)acrylamid ist.

5. Thermoplastische Formmasse nach Anspruch 1, 2 oder 3, dadurch gekennzeichnet, daß die Komponente $b_{22}$ N-Benzyl(methyl)acrylamid ist.

6. Thermoplastische Formmasse nach Anspruch 1, 2 oder 3, dadurch gekennzeichnet, daß die Komponente $b_{22}$ N-Phenylmethacrylamid ist.

7. Thermoplastische Formmasse nach einem der Ansprüche 1 bis 6, dadurch gekennzeichnet, daß sie, bezogen auf 100 Gew.-Teile A + B + C, zusätzlich 0,1 bis 40 Gew.-Teile übliche Zusatzstoffe (Komponente D) enthält.

8. Verwendung der Formmasse nach einem der Ansprüche 1 bis 7 zur Herstellung von Formteilen.

9. Formteile aus einer Formmasse nach einem der Ansprüche 1 bis 7.